(19) **Europäisches Patentamt**

**European Patent Office**

**Office européen des brevets**

(11) **EP 1 277 555 B1**

(12) **EUROPEAN PATENT SPECIFICATION**

(45) Date of publication and mention
of the grant of the patent:
**04.10.2006 Bulletin 2006/40**

(51) Int Cl.:
*B29C 37/00* (2006.01)  *B29C 39/08* (2006.01)
*B29C 31/04* (2006.01)  *B29C 39/24* (2006.01)
*B29C 41/04* (2006.01)  *B29D 11/00* (2006.01)

(21) Application number: **02253915.9**

(22) Date of filing: **05.06.2002**

(54) **A cavity-preventing type reactor and a method for fabricating a preform for a plastic optical fiber using the same**

Höhlungvermeidender Reaktor und Verfahren zur Herstellung eines Halbzeuges für optische Fasern in einem solchen Reaktor

Réacteur anti-cavitation et procédé de fabrication d'une préforme de fibre optique dans un tel réacteur

(84) Designated Contracting States:
**AT BE CH CY DE DK ES FI FR GB GR IE IT LI LU MC NL PT SE TR**

(30) Priority: **18.07.2001 KR 2001043151**
**13.12.2001 KR 2001078965**

(43) Date of publication of application:
**22.01.2003 Bulletin 2003/04**

(73) Proprietor: **SAMSUNG ELECTRONICS CO., LTD.**
**Suwon-City,**
**Kyungki-do 442-742 (KR)**

(72) Inventors:
• **Cho, Han Sol**
**Yusung-Gu,**
**Daejun-Shi, 305-390 (KR)**
• **Hwang, Jin Taek**
**Junmin-Dong,**
**Ysung-Gu 305-390 (KR)**

• **Choi, Jin Sung**
**Yusung-Gu,**
**Daejun-Shi, 305-728 (KR)**
• **Cho, Sung Hen**
**Yusung-Gu,**
**Daejun-Shi, 305-790 (KR)**

(74) Representative: **Kyle, Diana**
**Elkington and Fife LLP,**
**Prospect House**
**8 Pembroke Road**
**Sevenoaks,**
**Kent TN13 1XR (GB)**

(56) References cited:
**EP-A- 0 145 443**  **EP-A- 0 658 418**
**EP-A- 1 116 577**  **DE-A- 2 132 381**
**DE-A- 2 521 022**  **FR-A- 2 204 497**
**FR-A- 2 593 431**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a cavity-preventing type reactor and a method for fabricating a preform for a plastic optical fiber using the same. Particularly, the present invention relates to a cavity-preventing type reactor and a method for fabricating a preform for a plastic optical fiber using the same, wherein it is needless to charge monomer or prepolymer additionally into the vacancy formed after polymerization so as to compensate a volume shrinkage due to polymerization of the monomer under the rotation of a reactor.

Optical fibers used in the field of telecommunications are generally classified into a single-mode fiber and a multi-mode fiber in terms of the transmission mode of optical signal. Optical fibers currently used for long distance, high speed communications are mostly the step-index, single-mode optical fibers based on quartz glass. These optical fibers have a diameter as small as 5 microns to 10 microns, and as a result, these glass optical fibers face serious challenges in terms of achieving proper alignment and connection. Accordingly, these glass optical fibers are associated with expensive costs relating to achieving proper alignment and connection. Accordingly, these glass optical fibers are associated with expensive costs relating to achieving proper alignment and connection.

Alternatively, multi-mode glass optical fibers having a diameter that is larger than the diameter of single-mode optical fibers may be used for short distance communications such as in local area networks (LANs). However, these multi-mode glass optical fibers, in addition to being fragile, also suffer from expensive costs relating to achieving proper alignment and connection and therefore are not widely used. Accordingly, these multi-mode glass optical fibers have been mainly used for short distance communication applications up to 200 meters such as in LANs using a metal cable, for example, a twisted pair or coaxial cable. However, since the data transmission capacity or bandwidth of the metal cable is as low as about 150 Mbps and can not reach transmission speed of 625 Mbps, which is a standard for the year 2000 in accordance with asynchronous transfer mode (ATM), it cannot satisfy the future standard of transmission capacity.

To cope with these problems, the industry has expended great effort and investment over the past 10 years towards development of plastic optical fibers, which can be used in short distance communication applications, such as LANs. Since the diameter of plastic optical fibers can be as large as 0.5 to 1.0 mm which is 100 or more times than that of glass optical fibers, due to its flexibility, its alignment and connection are much easier issues than with glass optical fibers. Moreover, since polymer-based connectors may be produced by compression molding, these connectors can be used both for alignment and for connection and thereby reduce costs.

On the other hand, the plastic optical fiber may have a step-index (SI) structure, in which a refractive index changes stepwise in a radial direction, or a graded-index (GI) structure, in which a refractive index changes gradually in a radial direction. However, since plastic optical fibers having a SI structure have high modal dispersion, the transmission capacity (or bandwidth) of a signal cannot be larger than that of cable. On the other hand, since plastic optical fibers having a GI structure have a low modal dispersion, it can have a large transmission capacity. Therefore, it is known that GI plastic optical fiber is adequate for use as a communication medium for short distance, high-speed communications because of reduced costs derived from its larger diameter and large capacity of data transmission derived from low modal dispersion.

The conventional method for fabricating GI plastic optical fiber was first reported by a Japanese professor, Koike Y. et al. of Keio University in 1988[refer to *"Koike, Y. et al.*, *Applied Optics, Vol. 27, 486(1988)"*]. Since then, other related-techniques have been disclosed in U.S.Patent No.5,253,323(Nippon Petrochemicals Co.); U.S.Patent No. 5,382,448(Nippon Petrochemicals Co.); U.S.Patent No.5,593,621 to Yasuhiro Koike and Ryo Nihei; WO92/03750(Nippon Petrochemicals Co.); WO92/03751 (Nippon Petrochemicals Co.); Japanese Patent Laid-Open No.3-78706(Mitsubishi Rayon Co., Ltd.); and Japanese Patent Laid-Open No.4-86603(Toray Ind.). The methods disclosed in these prior patents are mainly classified into two methods as follows.

The first method is a batch process wherein a preliminary cylindrical molding product, namely, a preform in which a refractive index changes in a radial direction, is fabricated, and then the resultant perform is heated and drawn to fabricate GI plastic optical fiber.

The second method is a continuous process wherein a plastic fiber is produced by extrusion process, and then the low molecular material contained in the fiber is extracted, or contrarily introduced in a radial direction to obtain GI plastic optical fiber.

It is known that the first method directed to a batch process introduced by professor Koike can successfully fabricate a GI plastic optical fiber having data transmission capacity of 2.5 Gbps, and that the second method could also successfully fabricate a plastic optical fiber having a relatively large data transmission capacity.

Van Duijnhoven and Bastiaansen reported another method for fabricating GI preform wherein is used very high rotation speed as high as about 20,000 rpm as disclosed in WO 97/29903(U.S.Patent No.6,166,107). This method uses the principle that if a mixture of monomers or polymer-dissolving monomers having different density and refractive index is polymerized in a very strong centrifugal field over $10,000 \times d^{-0.5}$ rpm, where d is a diameter of a preform, concentration gradient is generated on account of a density gradient, and thereby, a refractive index gradient is generated. By the way, the said invention mentioned as if refractive index gradient did not develop at all when the rotation speed is $10,000 \times$

$d^{-0.5}$ rpm or less. It is true that high rotation speed is advantageous in producing definite refractive index profile. However, even if the mixture is put in a relatively weak centrifugal field, concentration (or refractive index) gradient develops, even small, on the condition that there is a density difference between the components of a mixture.

Besides, none of the aforementioned methods mention anything related to the problem inevitably caused by volume shrinkage during (radical) chain polymerization common in the fabrication of GI preform. For example, the extent of volume shrinkage from methylmethacrylate to poly(methylmethacrylate) is over 20%. Since volume shrinkage occurs when monomers are polymerized (to produce a polymer), a preform for a plastic optical fiber fabricated under the rotation of a reactor is hollow or vacant in its center to form a shape of a tube, so-called, cavity. Thus, it is required to fill the cavity with additional monomer, prepolymer or polymer-dissolving monomers in order to fabricate a cavity-free preform (as disclosed for instance in document EP-A-1 116 577).

Accordingly, when a plastic optical fiber is fabricated by using a cavity-filling type perform, the possibility that discontinuity of the refractive index profile develops increases in proportion to the size of a cavity, which can lead to a significant or remarkable scattering in the interface, therefore, reduce data transmission capacity, so that the optical fiber may not be useful.

Furthermore, in the process of filling the cavity, the resultant preform may deteriorate in quality due to contact with minute dust, air or moisture. And, additional appliance and cost are required in order to prevent this contact.

A feature of the present invention is to provide a cavity-preventing type reactor wherein it is not required to introduce a monomer additionally.

Another feature of the present invention is to provide a fabrication method of a preform for a plastic optical fiber wherein refractive index gradient in a radial direction is regulated by controlling the composition of mixture of monomers, prepolymers or polymer-dissolving monomers, namely a reactant, filled in the cavity-preventing type reactor or by controlling the rotation speed of the cavity-preventing type reactor according to degree of polymerization of a reactant.

According to one aspect of the present invention, there is provided a cavity-preventing type reactor, comprising:

(a) an introduction part having a reactant inlet through which a reactant is introduced into the whole reactor;
(b) a reaction part which is adjacent to the introduction part through a blocking wall and has a flow path, through which the reaction part is connected with the introduction part, at the center of the blocking wall; and
(c) one or more cavity-preventing structures which exist between the flow path of the reaction part and the reactant inlet of the introduction part, and has one or more flow paths though which the reactant flows from the introduction part to the reaction part, for preventing a cavity developed from the reactant inlet of the introduction part from extending to the reaction part during rotation of the reactor.

According to another aspect of the present invention, there is provided a method for fabricating a preform for a plastic optical fiber using the cavity-preventing type reactor, comprising:

(a) filling the reaction part and the introduction part of the reactor with a reactant; and
(b) polymerizing the reactant in the reaction part under the rotation of the reactor.

The above and other features d advantages of the present invention will become more apparent after a reading of the following detailed description when taken in conjunction with the drawings, in which:

Fig. 1 is a view of a preferred embodiment of a cavity-preventing type reactor according to the present invention;
Fig. 2 is a diagram illustrating a series of process steps for fabricating a preform for a plastic optical fiber using the preferred embodiment of the present invention;
Figs. 3(a) and 3(b) are cross-sectional views of another preferred embodiment of the present invention;
Fig. 4 is a cross-sectional view showing a cavity formed in a rotating reactor;
Fig. 5 is a schematic view showing an inclined reactor;
Fig. 6 is a cross-sectional view illustrating the apparatus for pressurizing both the inner part and the outer part of a reactor; and
Fig. 7 is a cross-sectional view showing a reaction apparatus where ultra violet (UV) light is used for polymerization.

Hereinafter, the present invention will be described in detail with respect to preferred embodiments illustrated in the annexed drawings.

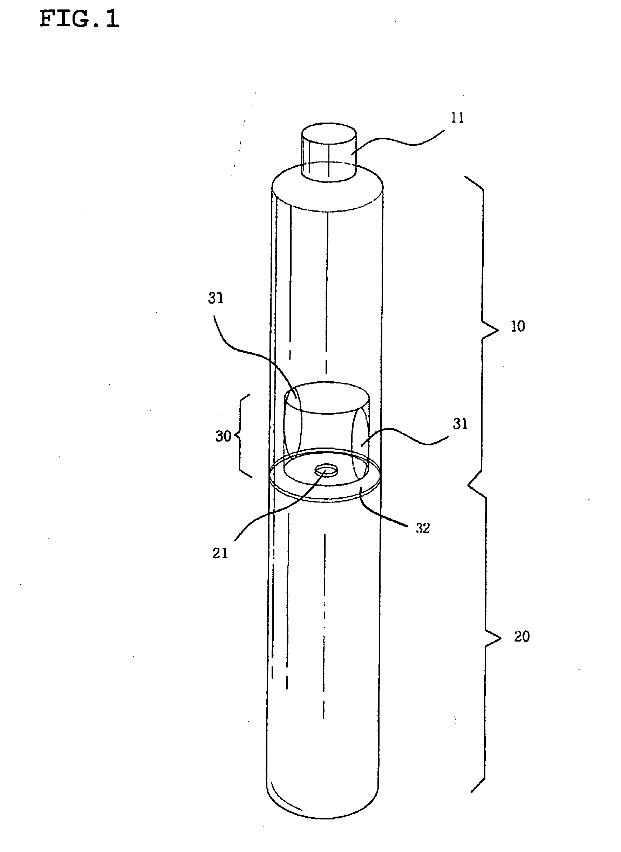

Fig. 1 is a view of a preferred embodiment of a cavity-preventing type reactor according to the present invention.

The reactor is cylindrical and is divided into an introduction part 10 and a reaction part 20. The introduction part 10 is equipped with a reactant inlet 11 through which a reactant is fed into the whole reactor. The reaction part 20 is equipped with a flow path 21 through which a reactant flows from the introduction part to the reaction part 20. Between the reactant inlet 11 of the introduction part 10 and the flow path 21 of the reaction part 20, there are provided a wall 32 and a cavity-preventing structure 30 and thus the reactor is divided into the introduction part and the reaction part. As a result, the wall 32 and the cavity preventing structure 30 prevent the cavity developed in the reactant inlet 11 from extending to the reaction part 20 when the reactor is under the rotation of a reactor. The cavity-preventing structure 30 is equipped with flow paths 31 through which reactant flows from the introduction part 10 to the reaction part 20.

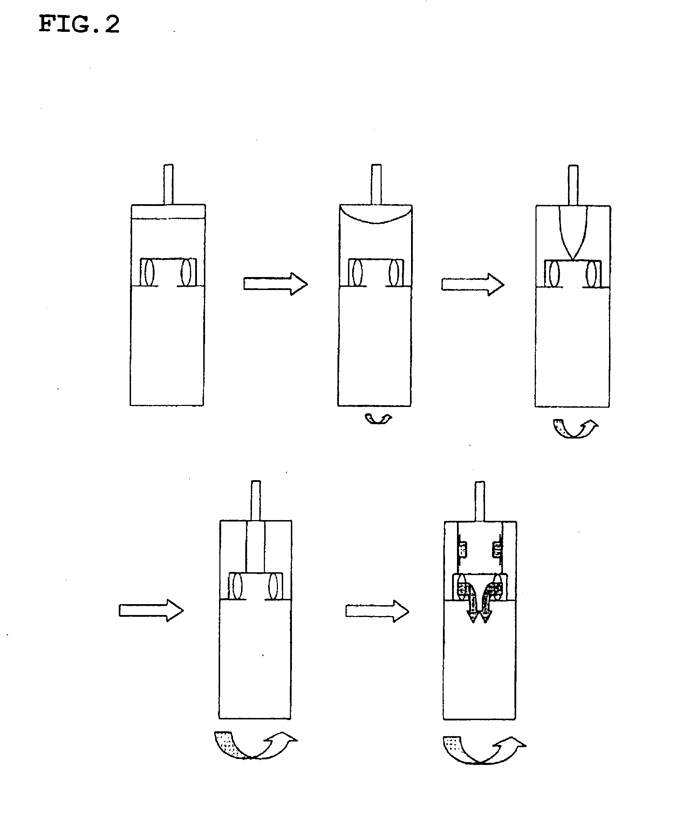

Fig. 2 is a diagram illustrating a series of process steps for fabricating a preform for a plastic optical fiber using the preferred embodiment of the present invention, depicted in the Fig. 1, operates. When the reactor is rotated, a cavity develops from the unoccupied space of the introduction part. However, the cavity does not extend to the reaction part because of the cavity-preventing structure as depicted in Fig. 2. As the reactant in the reaction part is polymerized under the continuous rotation of the reactor, volume shrinkage occurs. As much as the shrunken volume, the reactant flows from the introduction part to the reaction part. As a result, the cavity in the introduction part become larger and no cavity is formed in the reaction part. At this time, it is preferable to pressurize the reactant in the introduction part with an inert gas in order to help the reactant in the introduction part flow into the reaction part.

A cavity-preventing type reactor according to the present invention is not limited to the reactor depicted in Fig. 1. Any reactor is available on the condition that a cavity developed in an introduction part doesn't extend to a reaction part and the reactant in the introduction part flows into the reaction part.

For example, a diameter of a reaction part and a diameter of an introduction part may be the same as depicted in said Fig. 1 or may be different from each other. The shape of a cavity preventing structure may be cylindrical as depicted in said Fig. 1 or may be platelike. The number of cavity preventing structures may be one as depicted in said Fig. 1 or may be 2 or more. An introduction part may exist above a reaction part as depicted in said Fig. 1 or vice versa. It is possible that a reaction part lies along with the axis of rotation and is encircled with an introduction part.

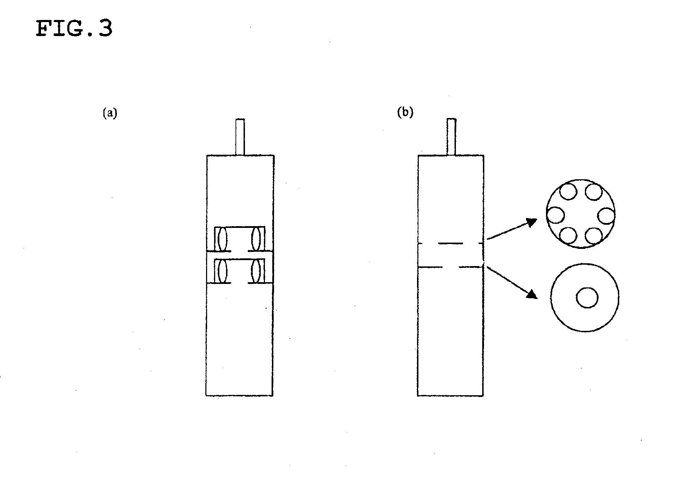

Figs. 3(a) and 3(b) are cross-sectional views of another preferred embodiment of the present invention. Fig. 3 (a) shows a reactor equipped with two cavity-preventing structures having the same structure as depicted in Fig. 1. Fig. 3(b) shows a reactor equipped with a platelike cavity-preventing structure between a reactant inlet of an introduction part and a flow path of a reaction part, the structure having several flow paths in the peripheral part of the plate.

The aforementioned embodiments are to exemplify the cavity-preventing type reactor of the present invention, and thus must not be understood as limiting the scope of the present invention.

Hereinafter, a fabrication method of a preform for a plastic optical fiber, using a cavity-preventing type reactor according to the present invention is disclosed in detail.

In the present invention, a reactant is fed into the reaction part of the cavity-preventing type reactor, and then is polymerized during the rotation to provide a preform for a plastic optical fiber. At this time, refractive index distribution in a radial direction of a preform for a plastic optical fiber is regulated by controlling the composition of the reactant introduced to the reaction part and the introduction part, the rotation speed of a reactor, etc.

Preferred embodiments of fabrication methods of a preform for a plastic optical fiber, wherein said cavity-preventing type reactor is used, are explained hereinafter. In the following embodiments, if we don't make mention of any particular things, the words such as 'reactant' should be interpreted as monomer(s), prepolymer(s) or polymer-dissolving monomer(s) containing a thermal or photo initiator and a chain transfer agent which are available in polymerization reaction.

In the first preferred embodiment of the present invention, the refractive index gradient of a reactant filling a reaction part is different from that of a reactant filling an introduction part by regulating the ratios of compositions of monomers.

Firstly, two kinds of reactants having the different ratios of composition of monomers are prepared using two or more kinds of monomers having different refractive indexes.

Secondly, a reaction part of a reactor is filled with a reactant having a low refractive index, and an introduction part of a reactor is filled with a reactant having a high refractive index.

Thirdly, a reactant of the reaction part is polymerized while the reactor is rotated in a constant or non-constant speed. At this time, volume shrinkage happens in the reaction part as reaction progresses in a reaction part and simultaneously, the reactant having a high refractive index flows from the introduction part to the center of the reaction part. Thus, the volume shrinkage is transferred to the introduction part and the refractive index of the center of the reaction part comes to be high. Because volume shrinkage occurs when polymerization progresses substantially, the reactant introduced to the center of the reaction part diffuses into polymer or oligomer of the reaction part to provide the preform with continuous refractive index gradient. As a result, when polymerization is completely carried out in the reaction part, a preform for a plastic optical fiber with a continuous refractive index gradient in a radial direction is provided.

In the second preferred embodiment of the present invention, a reaction part and an introduction part are filled with only one kind of reactant.

Firstly, a monomer having a low refractive index and high density is mixed with a monomer having a high refractive index and low density to provide a reactant.

Secondly, said reactant is fed into a reaction part and an introduction part of a cavity-preventing type reactor.

Thirdly, the reactant in the reaction part is thermally polymerized without rotation. When polymerization is performed to a certain degree, the reactor is rotated in a constant or non-constant speed until polymerization is completely carried out.

Finally, a preform for a plastic optical fiber with a continuous refractive index gradient in a radial direction is provided.

In this second preferred embodiment of the present invention, even if the reaction part and the introduction part are filled with only one kind of reactant, a monomer having a low refractive index and high density is diffused to the outer part of the reactor due to density difference under the rotation of a reactor to provide a preform for a plastic optical fiber, with a refractive index distribution wherein a refractive index corresponding to the central part of the perform is higher than that corresponding to the outer part of the perform.

In the third preferred embodiment of the present invention, prior to forming a core part, by filling partly a reaction part with a reactant and polymerizing the reactant under the rotation of a reactor, a clad part is formed.

Firstly, a reactant possessing low refractive index is fed into a reaction part of a reactor and is polymerized under the rotation of constant speed to be a clad part having desired thickness.

Secondly, when the clad part is completely polymerized to be glassified, the reaction part and the introduction part are respectively filled with different monomer mixtures distinguished from each other in mixing ratio of monomers in the same manner as the first preferred embodiment of the present invention or only one monomer mixture in the same manner as the second preferred embodiment of the present invention.

Finally, said reactant is polymerized under the rotation in a constant or non-constant speed to provide a preform for a plastic optical fiber, with a continuous refractive index gradient in a radial direction.

In the fourth preferred embodiment of the present invention, firstly, crushed fragments of a polymer having a lower refractive index and higher density than those of a monomer mixture are swelled or dissolved in the monomer mixture.

Secondly, the reactant of the polymer-dissolving monomers is fed into a reaction part and an introduction part of a reactor, and then is polymerized.

When the reactant of the reaction part is polymerized under the rotation of the reactor, the dissolved polymer having a higher density than that of the monomer mixture moves to the outer region of the reactor to form a clad part.

This preferred embodiment of the present invention has the following advantages:

a clad part can be formed by only one introduction;
relatively less heat is emitted during the polymerization; and
the volume shrinkage is so lessened that renders the fabrication process of a preform stable.

In this preferred embodiment of the present invention, a reaction part and an introduction part are respectively filled with different monomer mixtures distinguished from each other in mixing ratio of monomers in the same manner as the first preferred embodiment of the present invention or with only one monomer mixture in the same manner as the second preferred embodiment of the present invention.

In the fifth preferred embodiment of the present invention, a monomer mixture and a prepolymer are used together as reactants.

Firstly, a prepolymer, which has a lower refractive index and higher density than those of a monomer mixture, is prepared.

Secondly, the prepolymer is mixed into the monomer mixture, and then is fed into a reaction part and an introduction part. Alternatively, a reaction part is partly filled with the prepolymer, and then a whole reactor is filled with the monomer mixture.

Thirdly, polymerization is carried out under the rotation of the reactor in a constant or non-constant speed to provide a preform for a plastic optical fiber with a continuous refractive index gradient in a radial direction. At this time, a composition ratio of the mixture filling the introduction part can be controlled different from that of the mixture filling the reaction part as the first preferred embodiment of the invention. The viscosity of a prepolymer is preferably 500~500,000 cps(at 25°C), more preferably 1,000~10,000 cps (at 25°C). If viscosity of a prepolymer is less than 500cps, it is difficult to obtain the effect of prepolymer addition. If viscosity of a prepolymer is more than 500,000cps, many bubbles are formed in a preform and it takes long time to introduce it to the reactor.

This preferred embodiment of the present invention wherein a prepolymer is used, has the following advantages as the fourth preferred embodiment of the present invention wherein a polymer is dissolved:

a clad part can be formed by only one introduction;
relatively less heat is emitted during the polymerization; and
the volume shrinkage is so lessened that renders the fabrication process of a preform stable.

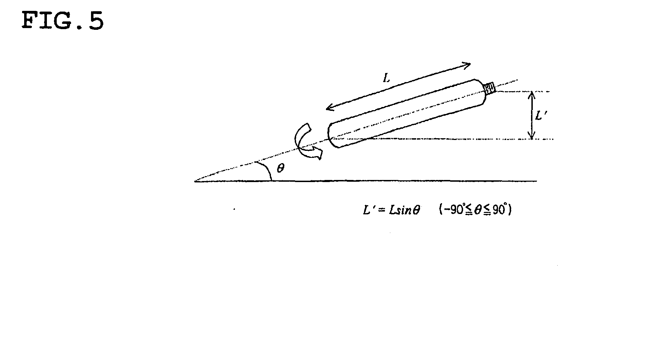

In the sixth preferred embodiment of the present invention, a reactor is rotated while set to an angle from -90 to 90 degrees relative to the horizontal surface (see Fig.5) in order to eliminate the refractive index gradient in an axial direction of a perform, which is caused by gravity.

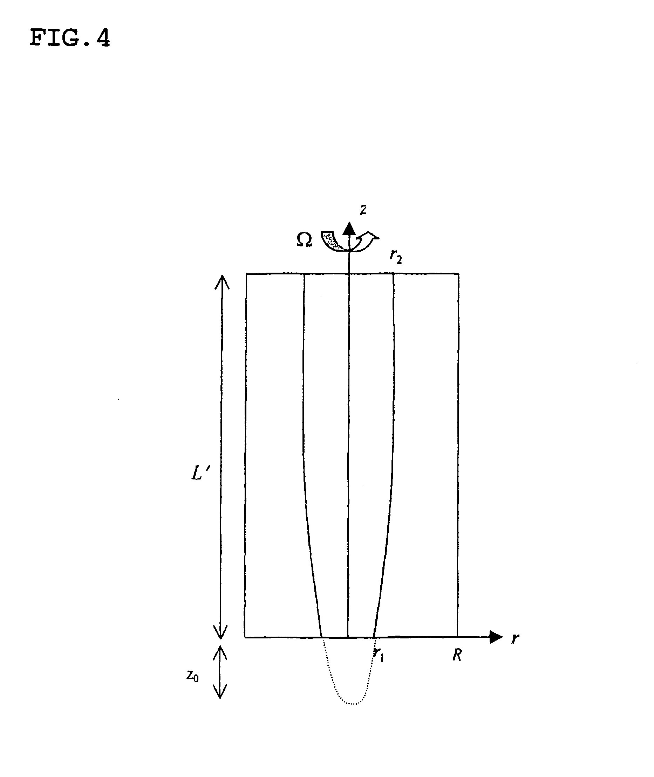

Fig. 4 is a cross-sectional view showing a cavity formed in a vertically rotating reactor. In a cavity-preventing type reactor, as the reactant in a reaction part is polymerized, its volume is shrunken to provide an imaginary meniscus. If this imaginary meniscus is taken into account, we can estimate the amount of the reactant that flows from an introduction part to a reaction part. This estimation can also provide a standard for a refractive index distribution profile and uniformity of refractive index gradient in an axial direction of a preform.

The meniscus of the cavity of said reactor satisfies the following Formula 1:

$$z + z_0 = \left( \frac{\Omega^2}{2g} \right)^5 r^2 \qquad (1)$$

wherein $\Omega$ is a rotation speed (rad/s) ;

g is a gravitational acceleration constant (about $9.8 m/s^2$); and

$z_0$ is a height (m) from the bottom of the imaginary meniscus to the real bottom of the reactor.

If 20% of volume shrinkage happens when the reaction part of the reactor is filled with a monomer mixture to the full, $Z_0$ is induced to the following Formula 2:

$$z_0 = \frac{\Omega^2 R^2}{10g} - \frac{L'}{2} \qquad (2)$$

A radius $r_1$ at z=0 and a radius $r_2$ at z=L' are calculated as the following Formula 3:

$$r_1 = \sqrt{\frac{2g}{\Omega^2} z_0} \qquad r_2 = \sqrt{\frac{2g}{\Omega^2} (L' + z_0)} \qquad (3)$$

By using these radii $r_1$ and $r_2$ of the above formula 3, for example, the condition under which $r_2 - r_1 < 0.01R$ is satisfied is calculated as the following Formula 4:

$$\Omega^2 > 223.6 \frac{gL'}{R^2} = 223.6 \frac{gL.\sin\theta}{R^2}^5 \qquad (4)$$

As seen in the above Formula 4, not only raising the rotation speed($\Omega$) of the reactor but also reducing the height L' along to the gravitational direction contributes to obtaining uniformity of a refractive index gradient in an axial direction. In order to reduce the height L', a reactor can be inclined as depicted in the Fig. 5. In the Fig. 5, the less the degree $\theta$ is, the smaller the height L' is. When the degree is sufficiently small, uniformity of refractive index gradient in an axial direction can be obtained even though the rotation speed is small.

In all the preferred embodiments of the present invention, a cavity due to volume shrinkage generated by polymerization is formed only in an introduction part. Thus, the volume of reactant charged into an introduction part must be regulated to secure the condition that, when volume shrinkage is completed, the diameter of the bottom of the cavity formed in an introduction part must be less than that of the cavity preventing structure to prevent the cavity from extending to the reaction part.

Furthermore, it is preferable to pressurize an introduction part of a reactor with inert gas such as argon.

This pressurization has these following advantages:

Firstly, it helps the reactant flow from an introduction part to a reaction part, thus prevents a cavity from forming in a reaction part of a reactor;

Secondly, it makes the polymerization reaction stable; and

Thirdly, it raises the boiling temperature of monomer, and thus a reaction can be carried out under higher temperature. Accordingly, the reaction time can be shortened and the reaction can be clearly carried out without formation of bubbles due to vaporization of unreacted substances.

At this time, if a cavity-preventing type reactor is made of fragile material such as glass, quartz, ceramics or plastics and so forth, it is difficult to pressurize inner part of the reactor more than 4 bar. However, if the outer part of the cavity-preventing type reactor is pressurized at the same time, the inner pressure of a reactor is allowed up to 10 bars.

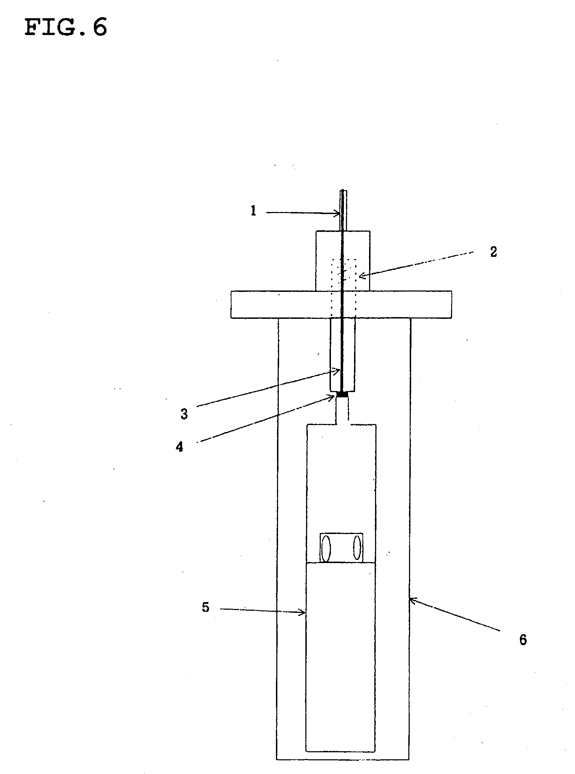

Fig. 6 is a cross-sectional view illustrating the apparatus for pressurizing both the inner part and the outer part of a cavity-preventing type reactor.

The apparatus is used in the following procedure:

Firstly, a rotation reaction apparatus is connected to an argon gas bomb through a quick connector 1 which is positioned in the upper part of the apparatus;

Secondly, a height-controllable lid 2 is raised;

Thirdly, argon gas is fed through a pressurization path 3 to an inner part of a cavity-preventing type reactor 5 and an inner part of the reaction apparatus 6. So, inner and outer parts are simultaneously pressurized.

Fourthly, the lid 2 is taken down and an O-ring (4) is pressed to seal the reaction apparatus.

According to the present invention, in principle, a cavity due to volume shrinkage in a reaction part is not formed. However, if a radical polymerization, where monomer can be vaporized due to the heat generated during the radical polymerization, is carried out in a reaction part, the vapourized gas bubbles gather together to be a cavity in a reaction part under the rotation of a reactor. As mentioned in the above, by pressurizing an introduction part and rotating the reactor in a non-constant speed, the bubbles formed in a reaction part move to an introduction part, and thus a cavity-free preform is fabricated.

In all the preferred embodiments of the present invention, polymerization in a reaction part can be carried out by heat or UV light.

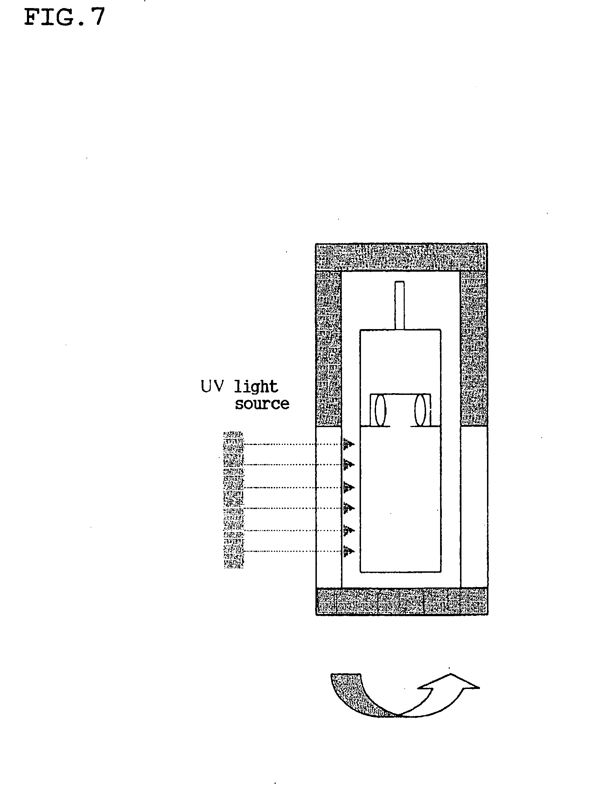

Fig. 7 is a cross-sectional view showing a reaction apparatus where UV light is used for polymerization.

When UV light is used in polymerization, a photo initiator is used instead of a thermal initiator as a reaction initiator.

The UV photopolymerization have the following advantages:

Firstly, because it is needless to raise the temperature of a reactor, the vaporization of a monomer is prevented and thus, the formation of a cavity is prevented; and

Secondly, because only the reaction part is exposed to an UV light, there is no possibility that the reactant of introduction part is glassified to stop the flow of the reactant to the reaction part. Namely, by using UV photopolymerization, it is more stable to fabricate a cavity-free preform for plastic optical fiber.

In all the preferred embodiments of the present invention, to obtain a more improved refractive index profile, diverse changes can be given to rotation speed of a reactor. For example, diverse changes in the rotation speed may be the simple repetition of rotating and stopping, sinusoidal function or a function whose period, phase and/or amplitude is varied.

In general, the preferred radius of the preform is about 1~ 10 cm to make heat transfer for polymerization easy. The preferred length of the preform is 100 cm or less to achieve a proper thermal drawing.

Two kinds of monomers having different refractive index used in the present invention are selected from the group consisting of methylmethacrylate, benzylmethacrylate, phenylmethacrylate, 1-methylcyclohexylmethacrylate, cyclohexylmethacrylate, chlorobenzylmethacrylate, 1-phenylethylmethacrylate, 1,2-diphenylethylmethacrylate, diphenylmethylmethacrylate, furfurylmethacrylate, 1-phenylcyclohexylmethacrylate, pentachlorophenylmethacrylate, pentabromophenylmethacrylate, styrene, TFEMA(2,2,2-trifluoroethylmethacrylate), PFPMA(2,2,3,3,3-pentafluoropropylmethacrylate), HFIPMA(1,1,1,3,3,3-hexafluoroisopropylmethacrylate) and HFBMA(2,2,3,3,4,4,4-heptafluorobutylmethacrylate).

Homopolymers or copolymers can be used as the polymers in the fourth preferred embodiment of the present invention.

The homopolymer is polymerized from a monomer such as methylmethacrylate, benzylmethacrylate, phenylmethacrylate, 1-methylcyclohexylmethacrylate, cyclohexylmethacrylate, chlorobenzylmethacrylate, 1-phenylethylmethacrylate, 1,2-diphenylethylmethacrylate, diphenylmethylmethacrylate, furfurylmethacrylate, 1-phenylcyclohexylmethacrylate, pentachlorophenylmethacrylate, pentabromophenylmethacrylate, styrene, TFEMA (2,2,2-trifluoroethylmethacrylate), PFPMA (2,2,3,3,3-pentafluoropropylmethacrylate), HFIPMA(1,1,1,3,3,3-hexafluoroisopropylmethacrylate) and HFBMA(2,2,3,3,4,4,4-heptafluorobuthylmethacrylate).

The copolymer includes, for example methylmethacrylate(MMA)-benzylmethacrylate(BMA) copolymer, styrene-acrylonitrile copolymer(SAN), MMA-TFEMA(2,2,2-trifluoroethylmethacrylate) copolymer, MMA-PFPMA(2,2,3,3,3-pentafluoropropylmethacrylate) copolymer, MMA-HFIPMA(1,1,1,3,3,3-hexafluoroisopropylmethacrylate) copolymer, MMA-HFBMA(2,2,3,3,4,4,4-heptafluorobuthylmethacrylate) copolymer, TFEMA-PFPMA copolymer, TFEMA-HFIPMA copolymer, styrene-methylmethacrylate(SM) copolymer and TFEMA-HFBMA copolymer.

The prepolymer used in the fifth preferred embodiment of the present invention is made from one or more monomers selected from the group consisting of methylmethacrylate, benzylmethacrylate, phenylmethacrylate, 1-methylcyclohexylmethacrylate, cyclohexylmethacrylate, chlorobenzylmethacrylate, 1-phenylethylmethacrylate, 1,2-diphenylethylmethacrylate, diphenylmethylmethacrylate, furfurylmethacrylate, 1-phenylcyclohexylmethacrylate, pentachlorophenylmethacrylate, pentabromophenylmethacrylate, styrene, TFEMA(2, 2, 2-trifluoroethylmethacrylate), PFPMA (2,2,3,3,3-pentafluoropropylmethacrylate), HFIPMA(1,1,1,3,3,3-hexafluoroisopropylmethacrylate), and HFBMA (2,2,3,3,4,4,4-heptafluorobutylmethacrylate).

The thermal initiator which is introduced for thermal polymerization includes, for example, 2,2'-azobis(isobutyronitrile), 1,1'-azo-bis(cyclohexanecarbonitrile), 2,2'-azobis(2,4-dimethylvaleronitrile), 2,2'-azobis(methylbutyronitrile), acetyl peroxide, lauroyl peroxide, benzoyl peroxide, tert-butyl peroxide, tert-butyl hydroperoxide, azo-tert-butane, azo-normal-butane and tert-butyl peracetate.

The photo initiator that is introduced for photopolymerization includes, for example, 4- (p-tolylthio)benzophenone, 4,4'-bis(dimethylamino)benzophenone and 2-methyl-4'-(methylthio)-2-morpholino-propiophenone, 1-hydroxylcyclohexyl-phenyl-ketone.

The chain transfer agent that is introduced for regulating molecular weight includes, for example, n-butyl mercaptan, lauryl mercaptan and dodecyl mercaptan.

A preform for a plastic optical fiber fabricated by the above process may be subjected to a thermal drawing to transform it to a graded index plastic optical fiber (GI-POF) having a desired diameter, or may be processed to a relatively thick strand to provide a refractive index-graded lens and an image guide for picture transmission.

The present invention is described in more detail by Examples and Comparative Example, but the Examples are intended to be only illustrative and, therefore, not intended to limit the scope of the present invention.

<u>EXAMPLES</u>

The cavity-preventing type reactors used in the following examples were of the same shape as depicted in Fig. 1, wherein its diameter is 40mm, the height of the introduction part of the reactor is 100mm, the height of the reaction part of reactor is 120mm, and the total height of the cavity-preventing reactor, including 25mm-high inlet, is 245mm.

At least 2 monomers were selected from the group consisting of styrene monomer(SM), methyl methacrylate (MMA) and trifluoroethyl methacrylate (TFEMA).

As a thermal initiator, 2,2'-azobis isobutyronitrile(AIBN) was used in MMA-SM reaction and tert-butyl peroxybenzoate(t-BPOB) was used in MMA-TFEMA reaction.

As a chain transfer agent, 1-butanethiol (1-BuSH) was used.

In UV photoreaction, as a photo initiator, 4,4'-bis (dimethylamino) benzophenone (DMABP) was used.

The loss of light of a plastic optical fiber was measured by using a optical power meter using a light source having the wavelength of 660nm after the perform was transformed into an optical fiber having a thickness of 1mm,

<u>Example 1:</u>

A solution consisting of 150g of the monomer mixture made of SM and MMA at a weight ratio of 20:80, 0.066% by weight of AIBN and 0.2% by weight of 1-BuSH, based to the weight of the resultant mixed solution was charged into the reaction part of the said cavity-preventing type reactor to the full. A solution consisting of 110g of the monomer mixture made of SM and MMA at a weight ratio of 40:60, 0.066% by weight of AIBN and 0.2% by weight of 1-BuSH, based to the weight of the resultant mixed solution was charged into the introduction part of the cavity-preventing type reactor up to a height of 85mm. The unoccupied space of the introduction part was charged with argon gas having the purity of 99.999% until the inner pressure reached 1 bar. After the reactor was closed with a lid, the reaction was performed in a rotation speed of 2,500 rpm at a temperature of 70°C for 12 hours. Subsequently, the rotation of the reactor was paused for 5 minutes, followed by rotation in a rotation speed of 2,500rpm for 10 minutes. These procedures were repeated several dozens of times to obtain a cavity-free preform for a plastic optical fiber. The loss of light of the resultant fiber was 300dB/km.

Example 2:

A solution consisting of 260g of the monomer mixture made of SM and MMA at a weight ratio of 30:70, 0.066% by weight of AIBN and 0.2% by weight of 1-BuSH, based to the weight of the resultant mixed solution was charged into the reaction part of the said cavity-preventing type reactor to the full. Simultaneously, the solution was charged into the introduction part of the said cavity-preventing type reactor up to a height of 85mm. The unoccupied space of the introduction part was charged with argon gas having the purity of 99.999% until the inner pressure reached 1 bar. After the reactor was closed with a lid, the reaction was performed in a rotation speed of 2,500 rpm at a temperature of 70°C for 12 hours. Subsequently, the rotation of the reactor was paused for 5 minutes, followed by rotation in a rotation speed of 2,500rpm for 10 minutes. These procedures were repeated several dozens of times to obtain a cavity-free preform for a plastic optical fiber. The loss of light of the resultant fiber was 300dB/km.

Example 3:

A solution consisting of 50 g of methylmethacrylate (MMA), 0.066% by weight of AIBN and 0.2% by weight of 1-BuSH, based to the weight of the resultant solution was charged into the reaction part of the cavity-preventing type reactor up to a height of 40mm. The unoccupied space of the reactor was charged with argon gas having the purity of 99.999% until the inner pressure reached 1 bar. After the reactor was closed with a lid, the reaction was performed in a rotation speed of 2,500 rpm at a temperature of 70°C for 12 hours to form a clad layer. Subsequently, A solution consisting of 110g of the monomer mixture made of SM and MMA at a weight ratio of 20:80, 0.066% by weight of AIBN and 0.2% by weight of 1-BuSH, based to the weight of the resultant mixed solution was heated to a temperature of 70°C, and then was charged into the reaction part of the said cavity-preventing type reactor. Subsequently, a solution consisting of 1108 of the monomer mixture made of SM and MMA at a weight ratio of 40:60, 0.066% by weight of AIBN and 0.2% by weight of 1-BuSH, based to the weight of the resultant mixed solution was heated to a temperature of 70°C, and then was charged into the introduction part of the said cavity-preventing type reactor up to a height of 85 mm. The unoccupied space of the introduction part was charged with argon gas having the purity of 99.999% until the inner pressure reached 1 bar. After the reactor was closed with a lid, the reaction was performed in a rotation speed of 2,500 rpm at a temperature of 70°C for 12 hours. Subsequently, the rotation of the reactor was paused for 5 minutes, followed by rotation in a rotation speed of 2,500rpm for 10 minutes. These procedures were repeated several dozens of times to obtain a cavity-free preform for a plastic optical fiber. The loss of light of the resultant fiber was 260dB/km.

Example 4:

A solution of 50 g of methylmethacrylate (MMA), 0.066% by weighc of AIBN and 0.2% by weight of 1-BuSH, based to the weight of the resultant solution was reacted at a temperature of 70°C for 24 hours to provide a polymer. Subsequently, the polymer was dissolved in a solution consisting of 110g of the monomer mixture made of SM and MMA at a weight ratio of 20:80, 0.066% by weight of AIBN and 0.2% by weight of 1-BuSH, based to the weight of the resultant mixed solution. The polymer-dissolved solution was charged into the reaction part of the said cavity-preventing type reactor. Subsequently, A solution consisting of 110g of the monomer mixture made of SM and MMA at a weight ratio of 40:60, 0.066% by weight of AIBN and 0.2% by weight of 1-BuSH, based to the weight of the resultant mixed solution was heated to a temperature of 70°C, and was charged into the introduction part of the said cavity-preventing type reactor up to a height of 85 mm. The unoccupied space of the introduction part was charged with argon gas having the purity of 99.999% until the inner pressure reached 1 bar. After the reactor was closed with a lid, the reaction was performed in a rotation speed of 2,500 rpm at a temperature of 70°C for 12 hours. Subsequently, the rotation of the reactor was paused for 5 minutes, followed by continuous rotation having a rotation speed of 2,500rpm for 10 minutes. These procedures were repeated several dozens of times to obtain a cavity-free preform for a plastic optical fiber. The loss of light of the resultant fiber was 250dB/km.

Example 5:

50 g of methylmethacrylate (MMA), 0.066% by weight of AIBN and 0.2% by weight of 1-BuSH, based to the weight of the resultant solution were polymerized at a temperature of 70°C for 4 hours to provide a prepolymer. The resultant prepolymer was introduced into the reaction part of the said cavity-preventing type reactor to a height of 40 mm. Subsequently, a solution consisting of 110g of the monomer mixture made of SM and MMA at a weight ratio of 20: 80, 0.066% by weight of AIBN and 0.2% by weight of 1-BuSH, based to the weight of the resultant mixed solution was charged into the remaining reaction part of the said cavity-preventing type reactor to the full. After that, a mixed solution consisting of 110g of the monomer mixture made of SM and MMA at a weight ratio of 40:60, 0.066% by weight of AIBN and 0.2% by weight of 1-BuSH, based to the weight of the resultant mixed solution was charged into the introduction part of the said cavity-preventing type reactor. The unoccupied space of the introduction part was charged with argon gas having the purity of 99.999% until the inner pressure reached 1 bar. After the reactor was closed with a lid, the reaction was performed in a rotation speed of 2,500 rpm at a temperature of 70°C for 9 hours. Subsequently, the rotation of the reactor was paused for 5 minutes, followed by continuous rotation in a rotation speed of 2,500rpm for 10 minutes. These procedures were repeated several dozens of times to obtain a cavity-free preform for a plastic optical fiber. The loss of light of the resultant fiber was 230dB/km.

Example 6:

A solution consisting of 260g of the monomer mixture made of SM and MMA at a weight ratio of 30:70, 0.066% by weight of AIBN and 0.2% by weight of 1-BuSH, based to the weight of the resultant mixed solution was charged into the reaction part of the said cavity-preventing type reactor and simultaneously, was introduced into the introduction part of the cavity-preventing type reactor up to a height of 85mm. The unoccupied space of the introduction part was charged with argon gas having the purity of 99.999% until the inner pressure reached 1 bar. After the reactor was closed with a lid, the reactor was set to an angle of +15 degrees relative to the horizontal surface and then, was rotated in a rotation speed of 1,000 rpm at a temperature of 70°C for 12 hours. Subsequently, the rotation of the reactor was paused for 5 minutes, followed by continuous rotation in a rotation speed of 2,500rpm for 10 minutes. These procedures were repeated several dozens of times to obtain a cavity-free preform for a plastic optical fiber. The loss of light of the resultant fiber was 290dB/km.

Example 7:

A solution consisting of 260g of the monomer mixture made of SM and MMA at a weight ratio of 30:70, 0.066 wt% of DMABP and 0.2 wt% of 1-BuSH, based to the weight of the resultant solution was charged into the reaction part of the said cavity-preventing type reactor and simultaneously, into the introduction part of the cavity-preventing type reactor up to a height of 85mm. The unoccupied space of the introduction part was charged with argon gas having the purity of 99.999% until the inner pressure reached 1 bar. After the reactor was closed with a lid, the reactor was rotated in a rotation speed of 2,500 rpm at a temperature of 40°C for 12 hours with being exposed to UV by use of the same UV radiation apparatus as depicted in Fig.7. Subsequently, the rotation of the reactor was paused for 5 minutes, followed by continuous rotation in a rotation speed of 2,500rpm for 10 minutes. These procedures were repeated several dozens of times to obtain a cavity-free preform for a plastic optical fiber. The loss of light of the resultant fiber was 300dB/km.

Example 8:

A solution consisting of 170g of the monomer mixture made of MMA and TFEMA at a weight ratio of 70:30, 0.066 wt% of t-BPOB and 0.25 wt% of 1-BuSH, based to the weight of the resultant solution was charged into the reaction part of the cavity-preventing type reactor. After the reactor was closed with a lid, the reaction was carried out at a temperature of 70°C for 12 hours without rotation. Additionally, the reaction was carried out in a rotation speed of 2,500 rpm at a temperature of 70°C for 12 hours to form a clad layer. Subsequently, a solution consisting of 150g of the monomer mixture made of MMA and TFEMA at a weight ratio of 90:10, 0.066 wt% of t-BPOB and 0.25 wt% of 1-BuSH, based to the weight of the resultant solution was heated up to 70°C and then charged into the reaction part of the cavity-preventing type reactor. After that, a mixed solution consisting of 120g of MMA, 0.066% by weight of t-BPOB and 0.2% by weight of 1-BuSH, based to the weight of the resultant solution was heated to a temperature of 70°C, and was charged into the introduction part of the said cavity-preventing type reactor up to a height of 85 mm. The unoccupied space of the introduction part was charged with argon gas having the purity of 99.999% until the inner pressure reached 1 bar. The reactor was closed with a lid, the reaction was carried out in a rotation speed of 2,500rpm at a temperature of 70°C for 12 hours. After that, the rotation of the reactor was paused for 5 minutes, followed by rotation in a rotation speed of 2,500rpm for 10 minutes. These procedures were repeated several dozens of times to obtain a cavity-free preform for a plastic optical fiber. The loss of light of the resultant fiber was 150dB/km.

Example 9 :

A solution consisting of 150g of the monomer mixture made of SM and MMA at a weight ratio of 10:90, 0.066 wt% of AIBN and 0.2 wt% of 1-BuSH, based to the weight of the resultant solution was charged into the reaction part of the cavity-preventing type reactor to the full. Subsequently, a solution consisting of 110g of the monomer mixture made of SM and MMA at a weight ratio of 20:80, 0.066 wt% of A13N and 0.2 wt% of 1-BuSH, based to the weight of the resultant solution was charged into the introduction part of the cavity-preventing type reactor up to a height of 85mm. The same rotation reaction apparatus as depicted in Fig. 6 was equipped with the said cavity-preventing type reactor, and then argon gas was led through a pressurization path (3) to an inner part of the said cavity-preventing type reactor (5) and an inner part of the said reaction apparatus (6) and was simultaneously pressurized to 10 bar. After that, the lid (2) was taken down and an O-ring (4) was pressed. After the reaction was carried out in a rotation speed of 2,500 rpm at a temperature of 110°C for 4 hours, the temperature was lowered to 90°C. The rotation of the reactor was paused for 5 minutes, followed by rotation in a rotation speed of 2,500rpm for 10 minutes at a temperature of 110°C. The said procedures were repeated several dozens of times. After 8 hours, a cavity-free preform for a plastic optical fiber was obtained. The loss of light of the resultant fiber was 250dB/km.

The reactivity of SM is so analogous to that of MMA that the preform made therefrom is an amorphous random copolymer. Even if the reactivity of TFEMA is lower to that of MMA, a transparent amorphous copolymer is made therefrom in all the aforementioned composition ratios.

The present invention provides a new cavity-preventing type reactor and a method for fabricating a preform for a plastic optical fiber having a continuous refractive index gradient and thus no discontinuity of refractive index profile in a radial direction by using the same wherein it is needless to introduce reactants additionally.

Although preferred embodiments of the method for fabricating a preform for a plastic optical fiber in accordance with the present invention have been disclosed for illustrative purposes, those skilled in the art will appreciate that various modifications, additions and substitutions are possible, without departing from the scope of the invention as disclosed in the accompanying claims.

**Claims**

1. A cavity-preventing type reactor, comprising:

    (a) an introduction part (10) having a reactant inlet (11) through which a reactant is introduced into the whole reactor;
    (b) a reaction part (20) which is adjacent to the introduction part through a blocking wall (32) and has a flow path (21), through which the reaction part (20) is connected with the introduction part (10), at the center of the blocking wall; and
    (c) one or more cavity-preventing structures (30) which exist between the flow path (21) of the reaction part (20) and the reactant inlet (11) of the introduction part (10), and has one or more flow paths though which the reactant flows from the introduction part (10) to the reaction part (20), for preventing a cavity developed from the reactant inlet (11) of the introduction part (10) from extending to the reaction part (20) during rotation of the reactor.

2. A cavity-preventing type reactor according to Claim 1, wherein the shape of said cavity-preventing structure (30) is cylindrical or platelike.

3. A cavity-preventing type reactor according to Claim 1 or 2, wherein said reactor is made of glass, quartz, ceramics or plastics.

4. A cavity-preventing type reactor according to any of Claims 1 to 3, wherein said reactor has a radius of 1~10 cm and a length of 100 cm or less.

5. A method for fabricating a preform for a plastic optical fiber using the cavity-preventing type reactor according to any of Claims 1 to 4, comprising:

    (a) filling the reaction part (20) and the introduction part (10) of the reactor with a reactant; and
    (b) polymerizing the reactant in the reaction part (20) under rotation of the reactor.

6. A method for fabricating a preform for a plastic optical fiber according to Claim 5, wherein unoccupied space of the introduction part (20) is charged and pressurized with inert gas.

7. A method for fabricating a preform for a plastic optical fiber according to Claim 6, wherein both an inner part and an outer part of said cavity-preventing type reactor are pressurized.

8. A method for fabricating a preform for a plastic optical fiber according to any of Claims 5 to 7, wherein said reactor is rotated at a constant or non-constant speed.

9. A method for fabricating a preform for a plastic optical fiber according to Claim 8, wherein movement at said non-constant speed of the reactor follows a simple repetition of rotating and stopping, sinusoidal function or a function whose period, phase and/or amplitude is varied.

10. A method for fabricating a preform for a plastic optical fiber according to any of Claims 5 to 9, wherein the reactant is a monomer mixture comprising at least two kinds of monomers having a different refractive index to each other, a polymerization initiator and a chain transfer agent.

11. A method for fabricating a preform for a plastic optical fiber according to Claim 10, wherein said at least two kinds of monomers are two monomers wherein one monomer has higher refractive index and lower density than the other monomer, and a mixture composing said two kinds of monomers, a polymerization initiator and a chain transfer agent is charged into the introduction part (10) and the reaction part (20) of the reactor.

12. A method for fabricating a preform for a plastic optical fiber according to Claim 10, wherein a monomer mixture filling the introduction part (10) has a higher refractive index than that of a monomer filling the introduction part.

13. A method for fabricating a preform for a plastic optical fiber according to any of Claims 10 to 13, wherein said monomer mixture is prepared by swelling or dissolving crushed fragments of a polymer having a lower refractive index than that of the monomer mixture in the monomer mixture and the reaction part (20) of the reactor is filled with the resulting monomer mixture.

14. A method for fabricating a preform for a plastic optical fiber according to any of Claims 10 to 13, wherein filling the reaction part (20) of the reactor is carried out by, after dissolving a prepolymer having a lower refractive index than that of the monomer mixture in the monomer mixture, filling the reaction part (20) of the reactor with the resultant monomer mixture or by, after filling partly the reaction part with only prepolymer, filling the remaining reaction part with a monomer mixture.

15. A method for fabricating a preform for a plastic optical fiber according to any of Claims 10 to 14, wherein at least two kinds of monomers are selected from methylmethacrylate, benzylmethacrylate, phenylmethacrylate, 1-methylcyclohexylmethacrylate, cyclohexylmethacrylate, chlorobenzylmethacrylate, 1-phenylethylmethacrylate, 1,2-diphenylethylmethacrylate, diphenylmethylmethacrylate, furfurylmethacrylate, 1-phenylcyclohexylmethacrylate, pentachlorophenylmethacrylate, pentabromophenylmethacrylate, styrene, TFEMA(2,2,2-trifluoroethylmethacrylate), PFPMA(2,2,3,3,3-pentafluoropropylmethacrylate), HFIPMA (1,1,1,3,3,3-hexafluoroisopropylmethacrylate) and HFBMA(2,2,3,3,4,4,4-heptafluorobuthylmethacrylate).

16. A method for fabricating a preform for a plastic optical fiber according to Claim 13, wherein said polymer is a homopolymer of a monomer selected from methylmethacrylate, benzylmethacrylate, phenylmethacrylate, 1-methylcyclohexylmethacrylate, cyclohexylmethacrylate, chlorobenzylmethacrylate, 1-phenylethylmethacrylate, 1,2-diphenylethylmethacrylate, d.i.phenylmethylmethacrylate, furfurylmethacrylate, 1-phenylcyclohexylmethacrylate, pentachlorophenylmethacrylate, pentabromophenylmethacrylate, styrene, TFEMA(2,2,2-trifluoroethylmethacrylate), PFPMA(2,2,3,3,3-pentafluoropropylmethacrylate), HFIPMA(1,1,1,3,3,3-hexafluoroisopropylmethacrylate) and HFBMA(2,2,3,3,4,4,4-heptafluorobuthylmethacrylate).

17. A method for fabricating a preform for a plastic optical fiber according to Claim 13, wherein said polymer is a copolymer selected from methylmethacrylate(MMA)-benzylmethacrylate(BMA) copolymer, styrene-acrylonitrile copolymer(SAN), MMA-TFEMA (2,2,2-trifluoroethylmethacrylate) copolymer, MMA-PFPMA (2,2,3,3,3-pentafluoropropylmethacrylate) copolymer, MMA-HFIPMA (1,1,1,3,3,3-hexafluoroisopropylmethacrylate) copolymer, MMA-HFBMA(2,2,3,3,4,4,4-heptafluorobuthylmethacrylate) copolymer, TFEMA-PFPMA copolymer, TFEMA-HFIPMA copolymer, styrene-methylmethacrylate copolymer and TFEMA-HFBMA copolymer.

**18.** A method for fabricating a preform for a plastic optical fiber according to Claim 14, wherein said prepolymer is made from one or more monomers selected from methylmethacrylate, benzylmethacrylate, phenylmethacrylate, 1-methylcyclohexylmethacrylate, cyclohexylmethacrylate, chlorobenzylmethacrylate, 1-phenylethylmethacrylate, 1,2-diphenylethylmethacrylate, diphenylmethylmethacrylate, furfurylmethacrylate, 1-phenylcyclohexylmethacrylate, pentachlorophenylmethacrylate, pentabromophenylmethacrylate, styrene, TFEMA(2,2,2-trifluoroethylmethacrylate), PFPMA(2,2,3,3,3-pentafluoropropylmethacrylate), HFIPMA(1,1,1,3,3,3-hexafluoroisopropylmethacrylate) and HFBMA(2,2,3,3,4,4,4-heptafluorobuthylmethacrylate).

**19.** A method for fabricating a preform for a plastic optical fiber according to Claim 14 or 18, wherein said prepolymer has a viscosity from 500 to 500,000 cps at 25°C.

**20.** A method for fabricating a preform for a plastic optical fiber according to any of Claims 5 to 19, wherein said reactant in the reaction part (20) is polymerized through thermal polymerization or UV photopolymerization.

**21.** A method for fabricating a preform for a plastic optical fiber according to any of Claims 5 to 20, wherein said reactor is rotated while set to an angle from -90 to 90 degrees relative to the horizontal surface.

**Patentansprüche**

**1.** Höhlungsvermeidender Reaktor, umfassend:

(a) einen Einführteil (10) mit einem Reagenseinlass (11), durch den ein Reagens in den ganzen Reaktor eingeführt wird;
(b) einen Reaktionsteil (20), der dem Einführteil durch eine Sperrwand (32) benachbart ist und einen Strömungsweg (21) aufweist, durch den der Reaktionsteil (20) mit dem Einführteil (10) in der Mitte der Sperrwand verbunden ist; und
(c) eine oder mehrere höhlungsvermeidende Strukturen (30), die zwischen dem Strömungsweg (21) des Reaktionsteils (20) und dem Reagenseinlass (11) des Einführteils (10) vorhanden sind, und einen oder mehrere Strömungswege aufweist, durch die das Reagens vom Einführteil (10) zum Reaktionsteil (20) fließt, um zu verhindern, dass sich ein vom Reagenseinlass (11) des Einführteils (10) entwickelter Hohlraum bei Drehung des Reaktors zum Reaktionsteil (20) ausdehnt.

**2.** Höhlungsvermeidender Reaktor nach Anspruch 1, worin die Form der höhlungsvermeidenden Struktur (30) zylindrisch oder plattenartig ist.

**3.** Höhlungsvermeidender Reaktor nach Anspruch 1 oder 2, worin der Reaktor aus Glas, Quarz, Keramik oder Kunststoff gebildet ist.

**4.** Höhlungsvermeidender Reaktor nach einem der Ansprüche 1 bis 3, worin der Reaktor einen Radius von 1-10 cm und eine Länge von 100 cm oder weniger aufweist.

**5.** Verfahren zur Herstellung einer Vorform für eine optische Kunststofffaser unter Verwendung des höhlungsvermeidenden Reaktors nach einem der Ansprüche 1 bis 4, umfassend:

(a) Füllen des Reaktionsteils (20) und des Einführteils (10) des Reaktors mit einem Reagens; und
(b) Polymerisieren des Reagens im Reaktionsteil (20) unter Drehung des Reaktors.

**6.** Verfahren zur Herstellung einer Vorform für eine optische Kunststofffaser nach Anspruch 5, worin unbesetzter Raum des Einführteils (20) mit Inertgas beschickt und unter Druck gesetzt wird.

**7.** Verfahren zur Herstellung einer Vorform für eine optische Kunststofffaser nach Anspruch 6, worin sowohl ein Innenteil und ein Außenteil des höhlungsvermeidenden Reaktors unter Druck gesetzt werden.

**8.** Verfahren zur Herstellung einer Vorform für eine optische Kunststofffaser nach einem der Ansprüche 5 bis 7, worin der Reaktor bei einer konstanten oder inkonstanten Geschwindigkeit gedreht wird.

**9.** Verfahren zur Herstellung einer Vorform für eine optische Kunststofffaser nach Anspruch 8, worin Bewegung bei einer inkonstanten Geschwindigkeit des Reaktors einer einfachen Wiederholung von Drehung und Anhalten, einer Sinusfunktion oder einer Funktion folgt, deren Periode, Phase und/oder Amplitude schwanken.

10. Verfahren zur Herstellung einer Vorform für eine optische Kunststofffaser nach einem der Ansprüche 5 bis 9, worin das Reagens eine Monomermischung ist, die mindestens zwei Arten von Monomeren mit einem voneinander verschiedenen Brechungsindex, einen Polymerisationsinitiator und einen Kettenüberträger umfasst.

11. Verfahren zur Herstellung einer Vorform für eine optische Kunststofffaser nach Anspruch 10, worin die mindestens zwei Arten von Monomeren zwei Monomere sind, worin ein Monomer einen höheren Brechungsindex und eine geringere Dichte aufweist als das andere Monomer, und eine Mischung, die die beiden Arten von Monomeren bilden, ein Polymerisationsinitiator und ein Kettenüberträger in den Einführteil (10) und den Reaktionsteil (20) des Reaktors aufgegeben werden.

12. Verfahren zur Herstellung einer Vorform für eine optische Kunststofffaser nach Anspruch 10, worin eine Monomermischung, die den Einführteil (10) füllt, einen höheren Brechungsindex aufweist als der eines Monomers, das den Einführteil füllt.

13. Verfahren zur Herstellung einer Vorform für eine optische Kunststofffaser nach einem der Ansprüche 10 bis 13, worin die Monomermischung durch Quellen oder Auflösen zerkleinerter Fragmente eines Polymers mit einem geringen Brechungsindex als der der Monomermischung in der Monomermischung bereitet wird und der Reaktionsteil (20) des Reaktors mit der erhaltenen Monomermischung gefüllt wird.

14. Verfahren zur Herstellung einer Vorform für eine optische Kunststofffaser nach einem der Ansprüche 10 bis 13, worin Füllen des Reaktionsteils (20) des Reaktors nach Auflösen eines Prepolymers mit einem geringeren Brechungsindex als der der Monomermischung in der Monomermischung durch Füllen des Reaktionsteils (20) des Reaktors mit der erhaltenen Monomermischung durchgeführt wird, oder nach teilweisem Füllen des Reaktionsteils nur mit Prepolymer durch Füllen des verbleibenden Reaktionsteils mit einer Monomermischung durchgeführt wird.

15. Verfahren zur Herstellung einer Vorform für eine optische Kunststofffaser nach einem der Ansprüche 10 bis 14, worin mindestens zwei Arten von Monomeren ausgewählt werden aus Methylmethacrylat, Benzylmethacrylat, Phenylmethacrylat, 1-Methylcyclohexylmethacrylat, Cyclohexylmethacrylat, Chlorbenzylmethacrylat, 1-Phenylethylmethacrylat, 1,2-Diphenylethylmethacrylat, Diphenylmethylmethacrylat, Furfurylmethacrylat, 1-Phenylcyclohexylmethacrylat, Pentachlorphenylmethacrylat, Pentabromphenylmethacrylat, Styrol, TFEMA (2,2,2-Trifluorethylmethacrylat), PFPMA (2,2,3,3,3,-Pentafluorpropylmethacrylat, HFIPMA (1,1,1,3,3,3-Hexafluorisopropylmethacrylat) und HFBMA (2,2,3,3,4,4,4-Heptafluorbutylmethacrylat).

16. Verfahren zur Herstellung einer Vorform für eine optische Kunststofffaser nach Anspruch 13, worin das Polymer ein Homopolymer von einem Monomer ist ausgewählt aus Methylmethacrylat, Benzylmethacrylat, Phenylmethacrylat, 1-Methylcyclohexylmethacrylat, Cyclohexylmethacrylat, Chlorbenzylmethacrylat, 1-Phenylethylmethacrylat, 1,2-Diphenylethylmethacrylat, Diphenylmethylmethacrylat, Furfurylmethacrylat, 1-Phenylcyclohexylmethacrylat, Pentachlorphenylmethacrylat, Pentabromphenylmethacrylat, Styrol, TFEMA (2,2,2-Trifluorethylmethacrylat), PFPMA (2,2,3,3,3,-Pentafluorpropylmethacrylat, HFIPMA (1,1,1,3,3,3-Hexafluorisopropylmethacrylat) und HFBMA (2,2,3,3,4,4,4-Heptafluorbutylmethacrylat).

17. Verfahren zur Herstellung einer Vorform für eine optische Kunststofffaser nach Anspruch 13, worin das Polymer ein Copolymer ist ausgewählt aus Methylmethacrylat-Benzylmethacrylat-Copolymer (MMA-BMA), Styrol-Acrylnitrilcopolymer (SAN), MMA-TFEMA-Copolymer (MMA-2,2,2-Trifluorethylmethacrylat), MMA-PFPMA-Copolymer (MMA-2,2,3,3,3-Pentafluorpropylmethacrylat), MMA-HFIPMA-Copolymer (MMA-1,1,1,3,3,3-Hexafluorisopropylmethacrylat), MMA-HFBMA-Copolymer (MMA-2,2,3,3,4,4,4-Heptafluorbutylmethacrylat), TFEMA-PFPMA-Copolymer, TFEMA-HFIPMA-Copolymer, Styrol-Methylmethacrylatcopolymer und TFEMA-HFBMA-Copolymer.

18. Verfahren zur Herstellung einer Vorform für eine optische Kunststofffaser nach Anspruch 14, worin das Prepolymer aus einem oder mehreren Monomeren gebildet ist ausgewählt aus Methylmethacrylat, Benzylmethacrylat, Phenylmethacrylat, 1-Methylcyclohexylmethacrylat, Cyclohexylmethacrylat, Chlorbenzylmethacrylat, 1-Phenylethylmethacrylat, 1,2-Diphenylethylmethacrylat, Diphenylmethylmethacrylat, Furfurylmethacrylat, 1-Phenylcyclohexylmethacrylat, Pentachlorphenylmethacrylat, Pentabromphenylmethacrylat, Styrol, TFEMA (2,2,2-Trifluorethylmethacrylat), PFPMA (2,2,3,3,3,-Pentafluorpropylmethacrylat, HFIPMA (1,1,1,3,3,3-Hexafluorisopropylmethacrylat) und HFBMA (2,2,3,3,4,4,4-Heptafluorbutylmethacrylat).

**19.** Verfahren zur Herstellung einer Vorform für eine optische Kunststofffaser nach Anspruch 14 oder 18, worin das Prepolymer eine Viskosität von 500 bis 500.000 cps bei 25°C aufweist.

**20.** Verfahren zur Herstellung einer Vorform für eine optische Kunststofffaser nach einem der Ansprüche 5 bis 19, worin das Reagens im Reaktionsteil (20) durch thermische Polymerisation oder UV-Photopolymerisation polymerisiert wird.

**21.** Verfahren zur Herstellung einer Vorform für eine optische Kunststofffaser nach einem der Ansprüche 5 bis 20, worin der Reaktor gedreht wird, während er auf einen Winkel von -90 bis 90 Grad relativ zur Horizontalfläche gestellt wird.

## Revendications

**1.** Réacteur de type empêchant la cavitation, comprenant :

(a) une partie d'introduction (10) ayant une entrée de réactant (11) par laquelle un réactant est introduit dans l'ensemble du réacteur ;
(b) une partie de réaction (20) qui est adjacente à la partie d'introduction à travers une paroi de blocage (32) et qui possède un trajet d'écoulement (21) par lequel la partie de réaction (20) est reliée à la partie d'introduction (10) au centre de la paroi de blocage ; et
(c) une ou plusieurs structures empêchant la cavitation (30) qui existe entre le trajet d'écoulement (21) de la partie de réaction (20) et l'entrée de réactant (11) de la partie d'introduction (10) et qui possède un ou plusieurs trajets d'écoulement par lesquels le réactant s'écoule depuis la partie d'introduction (10) vers la partie de réaction (20) afin d'empêcher une cavitation développée à partir de l'entrée de réactant (11) de la partie d'introduction (10) de s'étendre à la partie de réaction (20) au cours de la rotation du réacteur.

**2.** Réacteur de type empêchant la cavitation selon la revendication 1, dans lequel la forme de ladite structure empêchant la cavitation (30) est cylindrique ou en forme de plaque.

**3.** Réacteur de type empêchant la cavitation selon la revendication 1 ou la revendication 2, dans lequel ledit réacteur est en verre, en quartz, en céramique ou en plastique.

**4.** Réacteur de type empêchant la cavitation selon l'une quelconque des revendications 1 à 3, dans lequel ledit réacteur a un rayon de 1 à 10 cm et une longueur de 100 cm ou moins.

**5.** Procédé de fabrication d'une préforme pour une fibre optique plastique, utilisant le réacteur de type empêchant la cavitation selon l'une quelconque des revendications 1 à 4 et comprenant les étapes consistant à :

(a) remplir la partie de réaction (20) et la partie d'introduction (10) du réacteur avec un réactant ; et
(b) polymériser le réactant dans la partie de réaction (20) au cours de la rotation du réacteur.

**6.** Procédé de fabrication d'une préforme pour une fibre optique plastique selon la revendication 5, dans lequel l'espace inoccupé de la partie d'introduction (20) est chargé et pressurisé avec un gaz inerte.

**7.** Procédé de fabrication d'une préforme pour une fibre optique plastique selon la revendication 6, dans lequel à la fois une partie interne et une partie externe dudit réacteur de type empêchant la cavitation sont pressurisées.

**8.** Procédé de fabrication d'une préforme pour une fibre optique plastique selon l'une quelconque des revendications 5 à 7, dans lequel ledit réacteur tourne à une vitesse constante ou non constante.

**9.** Procédé de fabrication d'une préforme pour une fibre optique plastique selon la revendication 8, dans lequel le mouvement à ladite vitesse non constante du réacteur suit une répétition simple de rotation et d'arrêt, une fonction sinusoïdale ou une fonction dont la période, la phase et/ou l'amplitude varie.

**10.** Procédé de fabrication d'une préforme pour une fibre optique plastique selon l'une quelconque des revendications 5 à 9, dans lequel le réactant est un mélange de monomères comprenant au moins deux types de monomères ayant un indice de réfraction différent l'un de l'autre, un amorceur de polymérisation et un agent de transfert de chaîne

**11.** Procédé de fabrication d'une préforme pour une fibre optique plastique selon la revendication 10, dans lequel lesdits au moins deux types de monomères sont deux monomères dont l'un a un indice de réfraction plus élevé et une densité plus faible que l'autre monomère, et un mélange contenant lesdits deux types de monomères, un amorceur de polymérisation et un agent de transfert de chaîne est chargé dans la partie d'introduction (10) et la partie de réaction (20) du réacteur.

**12.** Procédé de fabrication d'une préforme pour une fibre optique plastique selon la revendication 10, dans lequel un mélange de monomères remplissant la partie d'introduction (10) a un indice de réfraction supérieur à celui d'un monomère remplissant la partie d'introduction.

**13.** Procédé de fabrication d'une préforme pour une fibre optique plastique selon l'une quelconque des revendications 10 à 13, dans lequel ledit mélange de monomères est préparé en faisant gonfler ou en dissolvant des fragments broyés d'un polymère ayant un indice de réfraction inférieur à celui du mélange de monomères dans le mélange de monomères et la partie de réaction (20) est remplie avec le mélange de monomères ainsi obtenu.

**14.** Procédé de fabrication d'une préforme pour une fibre optique plastique selon l'une quelconque des revendications 10 à 13, dans lequel le remplissage de la partie de réaction (20) du réacteur se fait, après avoir dissous un prépolymère ayant un indice de réfraction inférieur à celui du mélange de monomères dans le mélange de monomères, en remplissant la partie de réaction (20) du réacteur avec le mélange de monomères ainsi obtenu ou, après avoir rempli partiellement la partie de réaction avec le prépolymère seulement, en remplissant le reste de la partie de réaction avec un mélange de monomères.

**15.** Procédé de fabrication d'une préforme pour une fibre optique plastique selon l'une quelconque des revendications 10 à 14, dans lequel au moins deux types de monomères sont choisis parmi le méthacrylate de méthyle, le méthacrylate de benzyl, le méthacrylate de phényl, le méthacrylate de 1-méthycyclohexyle, le méthacrylate de cyclohexyle, le méthacrylate de chlorobenzyle, le méthacrylate de 1-phényléthyle, le méthacrylate de 1,2-diphényléthyle, le méthacrylate de diphénylméthyle, le méthacrylate de furfuryle, le méthacrylate de 1-phénylcyclohexyle, le méthacrylate de pentachlorophényle, le méthacrylate de pentabromophényle, le styrène, le TFEMA (méthacrylate de 2,2,2-trifluoroéthyle), le PFPMA (méthacrylate de 2,2,3,3,3-pentafluoropropyle), le HFIPMA (méthacrylate de 1,1,13,2,3-hexafluoroisopropyle), et le HFBMA (méthacrylate de 2,2,3,3,4,4,4-heptafluorobutyle).

**16.** Procédé de fabrication d'une préforme pour une fibre optique plastique selon le revendication 13, dans lequel ledit polymère est un homopolymère d'un monomère choisi parmi le méthacrylate de méthyle, le méthacrylate de benzyle, le méthacrylate de phényle, le méthacrylate de 1-méthylcyclohexyle, le méthacrylate de cyclohexyle, le méthacrylate de chlorobenzyle, le méthacrylate de 1-phényléthyle, le méthacrylate de 1,2-diphényléthyle, le méthacrylate de diphénylméthyle, le méthacrylate de furfuryle, le méthacrylate de 1-phénylcyclohexyle, le méthacrylate de pentachlorophényle, le méthacrylate de pentabromophényle, le styrène, le TFEMA (méthacrylate de 2,2,2-trifluoroéthyle), le PEPMA (méthacrylate de 2,2,3,3,3-pentafluoropropyle), le HFIPMA (méthacrylate de 1,1,1,3,3,3-hexafluoroisopropyle) et le HFBMA (méthacrylate de 2,2,3,3,4,4,4-heptafluorobutyle).

**17.** Procédé de fabrication d'une préforme pour une fibre optique plastique selon la revendication 13, dans lequel ledit polymère est un copolymère choisi parmi un copolymère de méthacrylate de méthyle (MMA) et méthacrylate de benzyle (BMA), un copolymère de styrène et acrylonitrile (SAN), un copolymère de MMA et TFEMA (méthacrylate de 2,2,2-trifluoroéthyle), un copolymère de MMA et PFPMA (méthacrylate de 2,2,3,3,3-pentafluoropropyle), un copolymère de MMA et HFIPMA (méthacrylate de 1,1,1,3,3,3-hexafluoroisopropyle), un copolymère de MMA et HFBMA (méthacrylate de 2,2,3,3,4,4,4-heptafluorobutyle), un copolymère de TFEMA et PFPMA, un copolymère de TFEMA et HFIPMA, le styrène, un copolymère de méthacrylate de méthyle et de copolymère de TFEMA et HFBMA.

**18.** Procédé de fabrication d'une préforme pour une fibre optique plastique selon la revendication 14, dans lequel ledit prépolymère est fait d'un ou plusieurs monomères choisis parmi le méthacrylate de méthyle, le méthacrylate de benzyle, le méthacrylate de phényle, le méthacrylate de 1-méthylcyclohexyle, le méthacrylate de cyclohexyle, le méthacrylate de chlorobenzyle, le méthacrylate de 1-phényléthyle, le méthacrylate de 1,2-diphényléthyle, le méthacrylate de diphénylméthyle, le méthacrylate de furfuryle, le méthacrylate de 1-phénylcyclohexyle, le méthacrylate de pentachlorophényle, le méthacrylate de pentabromophényle, le styrène, le TFEMA (méthacrylate de 2,2,2-trifluoroéthyle), le PFPMA (méthacrylate de 2, 2, 3, 3, 3-pentafluoropropyle), le HFIPMA (méthacrylate de 1, 1, 1, 3, 3, 3, hexafluoroisopropyle) et le HFBMA (méthacrylate de 2, 2, 3, 3, 4, 4, 4-heptafluorobutyle)

**19.** Procédé de fabrication d'une préforme pour une fibre optique plastique selon la revendication 14 ou la revendication 18, dans lequel ledit prépolymère a une viscosité dans la plage de 500 à 500 000 cps à 25°C.

**20.** Procédé de fabrication d'une préforme pour une fibre optique plastique selon l'une quelconque des revendications 5 à 19, dans lequel ledit réactant dans la partie de réaction (20) est polymérisé par polymérisation thermique ou par photopolymérisation aux UV.

**21.** Procédé de fabrication d'une préforme pour une fibre optique plastique selon l'une quelconque des revendications 5 à 20, dans lequel ledit réacteur tourne tout en étant réglé à un angle de -90 à 90 degrés par rapport à la surface horizontale.

FIG.1

FIG.2

FIG.3

(a)

(b)

FIG.4

# FIG.5

$$L' = L sin\theta \quad (-90° \leqq \theta \leqq 90°)$$

FIG.6

# FIG.7

UV light
source